# EUROPEAN PATENT SPECIFICATION

(11) **EP 2 740 112 B1**
(45) Date of publication and mention of the grant of the patent: **19.06.2019**
(21) Application number: 12759546.0
(22) Date of filing: 03.08.2012
(51) Int. Cl.: G08B 21/02, H04W 4/02, G08B 21/22

(54) **REDUCTION OF FALSE ALARMS IN ASSET TRACKING**
REDUZIERUNG VON FEHLALARMEN IN EINER ANLAGENÜBERWACHUNG
LIMITATION DES FAUSSES ALERTES DANS LA POURSUITE DES ÉQUIPEMENTS

(30) Priority: 03.08.2011 US 201161514777 P; 15.05.2012 US 201213472300
(43) Date of publication of application: 11.06.2014
(73) Proprietor: Qualcomm Incorporated, San Diego, CA 92121 (US)
(72) Inventor: DOYLE, Thomas F., San Diego, California 92121 (US); JORGENSEN, Christine M., San Diego, California 92121 (US); HENNENFENT, Susan M., San Diego, California 92121 (US); GILL, Harleen K., San Diego, California 92121 (US)
(74) Representative: Wegner, Hans
(86) International application number: PCT/US2012/049632
(87) International publication number: WO 2013/020104

(56) References cited:
- WO-A1-2011/053899

## Description

### FIELD OF THE INVENTION

The present invention relates generally to computer network communications, and more specifically to methods and devices for tracking assets.

### BACKGROUND

Asset tracking applications are often designed to monitor whether the asset is within one or more prescribed geo-spatial areas, which would normally be configured around the primary location of the asset. When there is a "breach" of this area by the asset, one or more people can be notified, such as by email or instant message. It is advantageous to be able to notify multiple people, so that at least one of the people is likely to be available to recover the asset. However, when one person takes the asset outside of the area for legitimate reasons, the breach detection generates a false alarm, confusing the people who are not aware of the legitimate event.

As an example, the asset may be a pet, such as a dog, and the geo-spatial area the pet's domicile. When the dog is taken outside of the area for a walk or to the vet, a false alarm is generated. Of course, the asset need not be a pet. As another example, the asset may be a piece of construction equipment, such as a bulldozer, and the geo-spatial area a construction site. If an employee drives the bulldozer out of the construction site for refueling or the bulldozer is removed off site for repair, again a false alarm is generated.

Document WO 2011/053899 A1 discusses a method of operation of a navigation system includes: selecting a monitored threshold including a group association, a time association, or a combination thereof; selecting a monitored boundary; monitoring a monitored person's traversal of the monitored boundary; and generating an alert based on the monitored person's traversal and the monitored threshold for displaying on a device.

### SUMMARY

The various embodiments discussed below provide convenient solutions for reducing false alarms generated when removing an asset from a predetermined "safe" zone. The asset is provided with a tracking device equipped with one or more sensors to indicate that an upcoming breach event is intentional and should not generate an alert. In an embodiment, a button on the tracking device may be pressed by a person that is taking the asset outside of the safe zone. In another example embodiment, the tracking device can detect proximity to an authorized person such as through their Bluetooth equipped handset. When a breach occurs within a prescribed timeframe after pressing the button, or (optionally) anytime the asset remains within proximity of an authorized person, the breach notifications are suppressed.

### BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.
FIG. 1 is a plan view illustrating a predetermined safe zone with base station having a short range transceiver and an asset with a tracking device.
FIG. 2 is a communication system block diagram of a communication network which includes a tracking device linked to a local wireless communication network according to an embodiment.

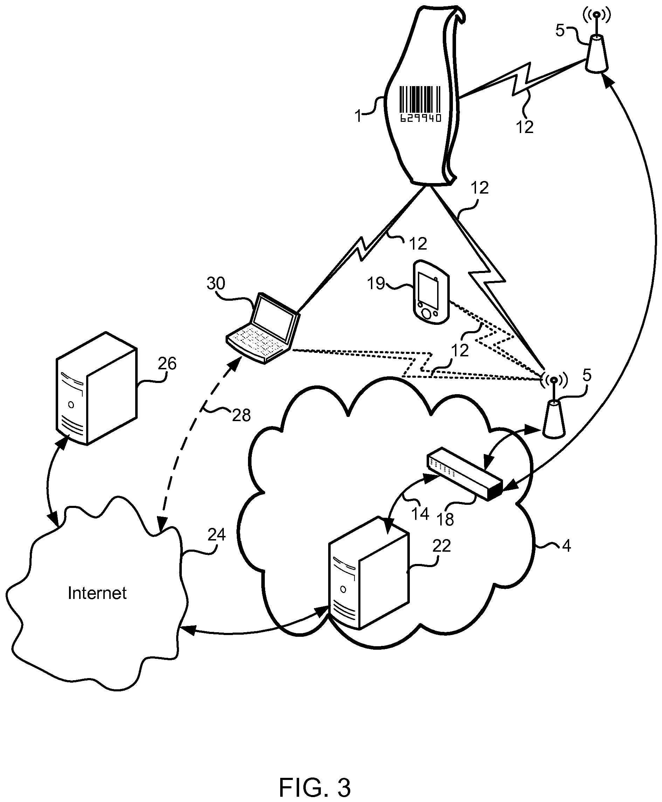

FIG. 3 is a communication system block diagram of a communication network which includes a tracking device linked to a local communication network and the Internet according to an embodiment.
FIG. 4A is a perspective view of a tracking device according to an embodiment.
FIG. 4B is a bottom view of the embodiment illustrated in FIG. 4A.
FIG. 5A is a process flow diagram of an embodiment method for reducing false alarms when tracking assets.
FIGs. 5B-5C are process flow diagrams of another embodiment method for reducing false alarms when tracking assets.
FIGs. 6A and 6B are process flow diagrams of other embodiment methods for reducing false alarms when tracking assets.
FIGs. 7A and 7B are component block diagrams of alternative embodiments of a tracking device with alternative components for recharging the tracking device with power.
FIG. 8 is a system block diagram of a mobile device, such as a smartphone suitable for use with any of the aspects.
FIG. 9 illustrates an embodiment of a central server that may be used with the embodiments of the system.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

As used herein, the terms "mobile computing device" and "handheld device" refer to any one or all of cellular telephones, personal data assistants (PDA's), palm-top computers, wireless electronic mail receivers, and cellular telephone receivers (e.g., the Blackberry® and Treo® devices), multimedia Internet enabled cellular telephones (e.g., the Blackberry Storm®), and similar personal electronic devices which include a programmable processor and memory, a wireless communication transceiver.

Miniaturization and the reduction in costs have led to the wide availability of tracking devices. For example, the global positional system (GPS) uses satellites orbiting the earth for real time tracking. GPS allows motorists, bikers, boaters, and pedestrians equipped with GPS receivers to know their exact position (within a few feet) anywhere in the world.

Various embodiments incorporate both a low-power RF receiver and a relatively high-power radio, such as a cellular telephone transceiver, for tracking. A relatively small "safe zone," discussed in more detail below, can be defined by the area in which a low-power radio can receive a relatively short range RF beacon. When the asset is removed from the safe zone, and thus radio signals from the safe zone beacon may no longer be received, the asset can be tracked with communication signals transmitted from the high-power radio or transceiver.

In an embodiment, to prevent false alarms when the asset is intentionally removed from the safe zone, a special mode on the tracking device or on a server may be activated by the user. As will be discussed in more detail below, this may be accomplished by the pressing of a button, entry of a code, or detection of a certain condition. In response, the asset tracking device (or a server) may start a first timer which provides for a predetermined time by which the asset tracking device is expected to leave the safe zone. This time may be predetermined by the user to reflect an expected maximum amount of time required to exit the safe zone. In this mode, the asset tracking device (or a server) monitors for the device leaving the safe zone. If the asset is not removed from the safe zone within this predefined period of time, the tracking device (or a server) may reset to its normal operating mode.

If the asset is taken out of the safe zone within the time predefined for the first timer, a second timer may be set. The second timer provides the user a defined period of time in which the asset can be out of the safe zone without issuing or sending an alarm. If the asset tracking device (or a server) determines that it is back in the safe zone prior to the expiration of the second defined period of time, the tracking device (or the server) resets to its normal operating mode. If the user fails to return the asset to the safe zone in the allotted time, the second, high-power radio or wireless transceiver may be activated and an alarm may be issued or sent, such as via a cellular data network. In embodiments in which some of the functionality is implemented in a server, the server may issue or send the alarm. The alarm may include, for example, e-mail or SMS messages to one or more people notifying them of the failure to return the asset to the safe zone. Such messages may also include the location of the asset tracking device so that it may be located. In order to accommodate excursions passing briefly through the safe zone, methods may be implemented to ensure the tracking devices are reliably and intentionally back within the safe zone before the normal operating mode is reset. For example, an algorithm with hysteresis values may require that any return to the safe zone must exceed a minimum time threshold before re-setting the operating mode. Optionally, this timer need not be used, i.e. the system may always suppress the first breach event following the input.

Alternatively, the system may not employ a second timer. Rather, in an embodiment the system may simply suppress the detection of the breach, while maintaining normal geo-fence monitoring. In this embodiment, the system would detect return to the safe zone regardless of when it might occur, and any subsequent breach events would be detected normally and the user notified normally.

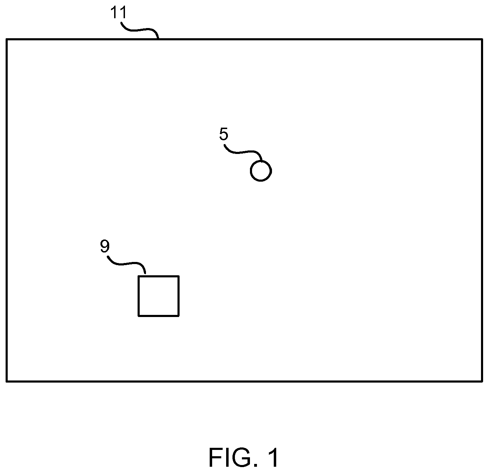

FIG. 1 is a plan view illustrating a predetermined safe zone 11 with a base station 5 according to an embodiment. As discussed above, the base station 5 may be configured with a low-power, short range radio transmitter similar to those used in cordless phones. The asset 9 is illustrated as being initially located within the safe zone 9. If the asset is a pet, such as a dog, the safe zone 9 may include a house and the surrounding property. In some embodiments, the owner's property, and hence the safe zone 11, may be larger than the range of the base station 5 short range radio transmissions. In these embodiments, the safe zone 11 may be defined by a geo-fence or virtual fence (as may be determined by a GPS receiver or cellular telephone power IDs). That is, a virtual fence can be programmed by use of GPS coordinates to set the boundaries of the safe zone 11. In an alternative embodiment, a large safe zone 11 may include more than one base station 5 spaced apart so as to provide signal coverage of the entire safe zone 11.

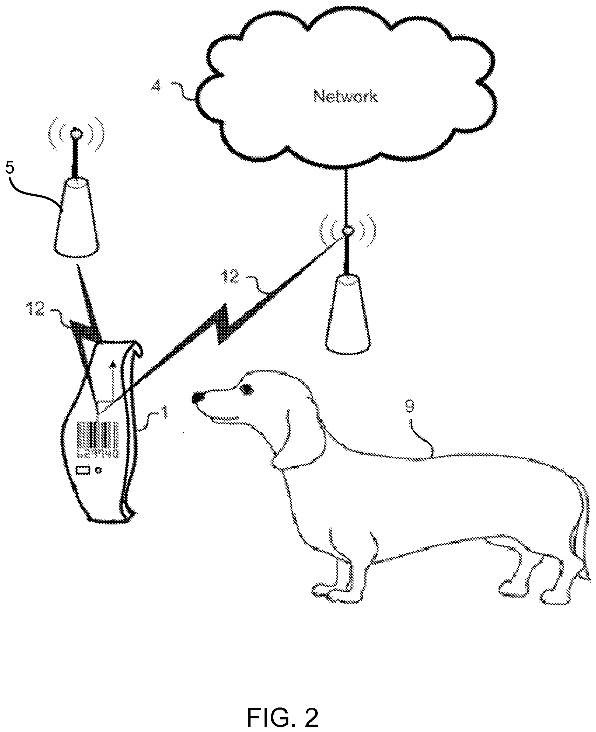

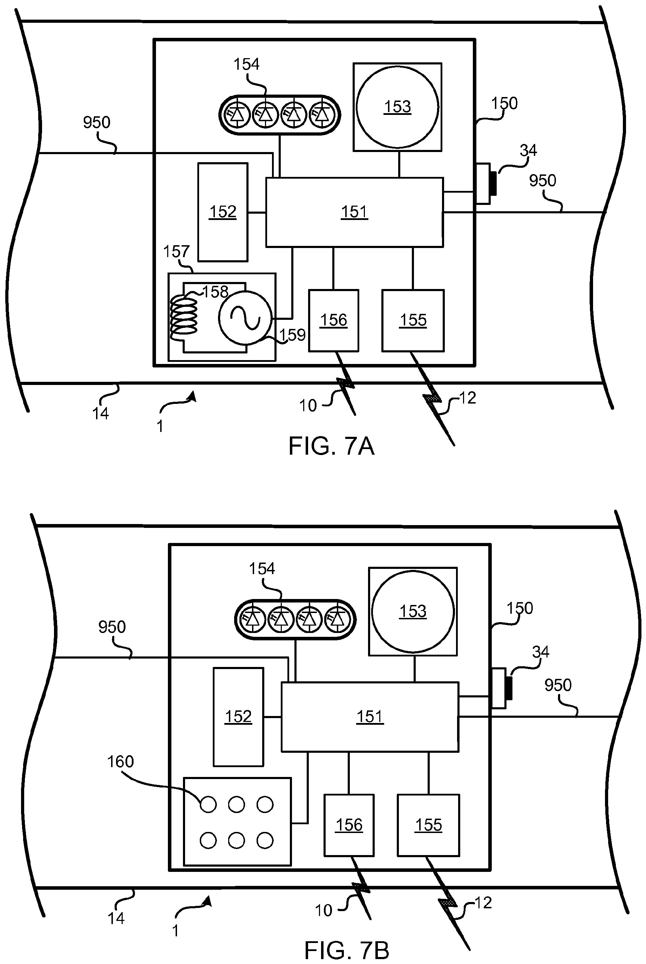

FIG. 2 shows typical elements of a communication system, including a tracking device 1 to be placed on an asset 9. The tracking device 1 may include an internal short range radio receiver for receiving the RF beacon 12 from the base station 5 (i.e., a safe zone beacon), and a long range (i.e., high-power) radio or wireless transceiver for establishing wireless communications links 10 with a cellular base station 6 of a cellular data network 4, such as a cellular telephone system. As is well known, a cellular telephone network 4 may include switching centers 18 which are coupled in network connections 14 to Internet gateway servers 22 to enable data connections to the Internet 24. A cellular data network 4 may also enable telephone calls to be made to cellular telephones 19 as well as landline telephones (not shown). Through the Internet 24, messages may be sent to remote servers 26 configured to provide asset monitoring services. As described more fully below with reference to FIG. 7, the tracking device 1 includes one or more processors and memory which enable the device to execute algorithms for accomplishing the asset tracking functions. Such algorithms include allowing the tracked asset 9 to reenter and leave the safe zone 11 multiple times on a single excursion without resetting the tracking device 1.

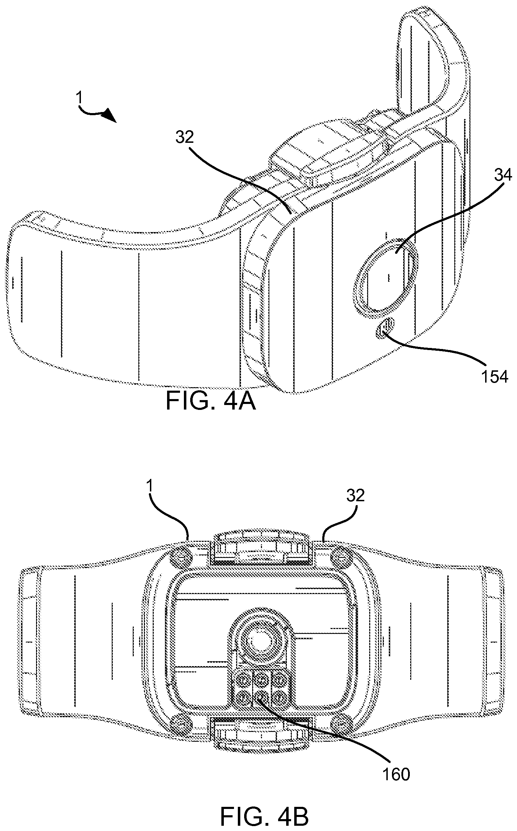

FIGs. 4A and 4B illustrate a tracking device 1 in the form of a dog collar according to an embodiment. FIG. 4A is a perspective view of the tracking device 1 while FIG. 4B illustrates the bottom of the tracking device 1. The tracking device 1 includes an user input mechanism 34 and an indicator 154. The user input mechanism 34 may be used to initialize the tracking device 1 and start the false alarm algorithm, explained in more detail below. The user input mechanism 34 may be, for example, a push button, a miniature keypad or another type of switch whose actuation may be sensed by a processor of the device. For additional security, the user input mechanism may be a keypad for entering a security code, such as a personal identification number (PIN). Alternatively, the user input mechanism 34 may be a transceiver configured to detect a radio frequency identification (RFID) tag or chip. For example, the RFID tag or chip may be located inside a leash close to where it attaches to a collar. In this example, when the lease is attached to the collar, the RFID tag or chip is close enough in proximity to the tracking device 1 to activate the user input mechanism 34 that triggers a processor of the tracking device to enter an operating mode, such as a safe zone operating mode.

Alternatively, activation of the breach suppression algorithm in the tracking device 1 may be accomplished with a Bluetooth communication signal from the user's phone and/or from any other Bluetooth accessory that may be carried by the user. In this embodiment, the Bluetooth device becomes a form of RFID tag or chip which the tracking device 1 can sense within a predetermined proximity. Because of the unique serial number of each Bluetooth device, this embodiment allows authentication of the tracking device 1 with the user. In another embodiment, the user may activate the tracking device 1 by sending a message to the tracking device 1, such as, but not limited to, an short message service (SMS) message.

The indicator 154 may inform the user that the tracking device 1 has been activated and/or that breach suppression has been engaged. The indicator 154 may produce a visual or audible indication or combination thereof. For example, the indicator may include one or more light emitting diodes (LEDs). A first LED may indicate that the tracking device has been activated, while a second LED may indicate that the breach suppression has been engaged. Alternatively, the indicator 154 may be a speaker which emits one or more beeps. Alternatively, the indicator 154 may include both LEDs and a speaker.

The tracking device 1 also includes a housing 32 which houses the electronics of the device, including but not limited to, a transceiver, a processor, a memory, and a battery as described in more detail below. The housing 32 may be waterproof and shock resistant to protect the electronics from the environment. The housing 32 is configured so that the electronics can be serviced, such that worn or damaged parts may be replaced or repaired. Also shown in FIG 4B are sockets 160 configured to receive pins from a charging station. In this manner, the internal battery may be recharged by connecting it to a charging station, which may also enclose the RF beacon transmitter. The sockets 160 may also be configured to enable a user to configure operating parameters of the tracking device through connections with a computer or other form of user interface, such as to set the time or durations of the first and second timers. As described below, in an alternative embodiment, the tracking device includes an inductive coil for recharging. In this embodiment, the sockets 160 may be omitted.

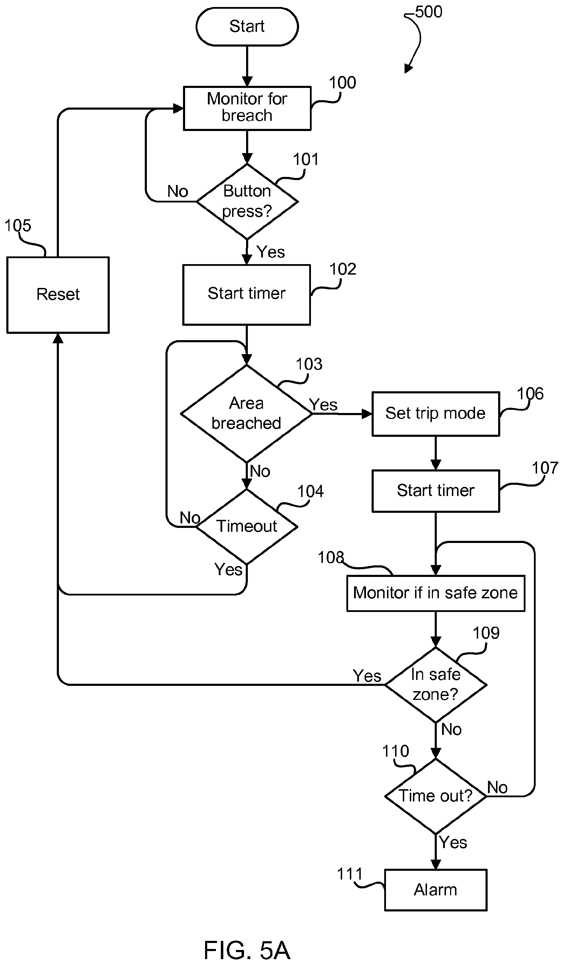

An example of operations that may be implemented in an embodiment of a method 500 is illustrated in the process flow shown in FIG. 5A. When the tracking device 1 is turned on, it may begin monitoring for a breach of the safe zone in step 100. The tracking device 1 also monitors an user input mechanism 34 for a signal activating the false alarm reduction algorithm, determination step 101. For example, a user may activate the false alarm reduction algorithm by pressing a button, entering a personal identification number (PIN) in a small keypad, or actuating a switch, any of which may be detected by the tracking device processor in determination step 101. If no activation is sensed, then the tracking device continues monitoring for a breach (i.e., determination step 101 = "No"). If an activation is sensed (i.e., determination step 101 = "Yes"), a first timer is started in step 102. This timer gives the user a predetermined amount of time, for example 10 to 15 minutes, to exit the safe zone 11 with the asset 9. In an embodiment, this first predetermined amount of time is set by the manufacturer. The manufacturer's settings may also be configurable to improve the performance of the system. In an alternative embodiment, the user may select or change the time period of the first predetermined amount of time.

After the first timer is started, the tracking device monitors the first radio receiver to detect a breach of the safe zone in determination step 103, such as by detecting when the RF beacon can no longer be received and/or by monitoring the tracker GPS location as compared to a virtual boundary around the safe zone. If a breach is not yet detected (i.e., determination step 103 = "No"), the device processor determines if the first predetermined amount of time has expired in determination step 104. If the first predetermined amount of time has not expired, (i.e., determination step 104 = "No"), then the tracking device 1 keeps monitoring for a breach. If the first predetermined amount of time has expired, (i.e., determination step 104 = "Yes"), then the asset 9 has not been removed within the allotted time, so the tracking device 1 resets in step 105 and returns to normal operations monitoring for a breach of the safe zone in step 100.

If a breach is detected as occurs when the asset 9 is removed from the safe zone 11 (i.e., determination step 103 = "Yes") before the first predetermined time expires, then a departure mode (e.g., a "trip mode") may be set in step 106. Optionally, this departure mode may include setting a heightened security level. Such heightened security may entail, for example, turning on a wide area communications chip so that the asset monitoring device can be tracked through cellular or other wide area networks during the time that the device is outside the safe zone. Also, a second timer may be started in step 107. The second timer provides the user with an allotted amount of time to be out of the safe zone 11 before the asset tracking device 1 may issue or send an alarm. The tracking device 1 periodically monitors if the asset has been returned to the safe zone, step 108 and determination step 109. When the asset 9 is returned to the safe zone 109 (i.e., determination step 109 = "Yes"), the tracking device is reset in step 105 and returns to normal operations monitoring for a breach of the safe zone in step 100. While the asset is outside the safe zone (i.e., determination step 109 = "No"), the second timer is polled to determine if the second predetermined amount of time has expired, determination step 110. If the predetermined time to be outside of the safe zone has expired (i.e., determination step 110 = "Yes"), an alarm may be issued or sent in step 111. If the time has not expired (i.e., determination step 110 = "No"), the tracking device continues monitoring to see if the asset is returned to the safe zone 11 by returning to step 108. As discussed above, the alarm may be an e-mail or SMS to one or more people informing them of the breach and providing location information.

In an alternative embodiment, the operation of setting of the second timer 107 may be eliminated. In this embodiment, the asset may be outside of the safe zone for an unlimited amount of time. However, upon determination of the return of the asset to the safe zone 109, the tracking device 105 may be reset.

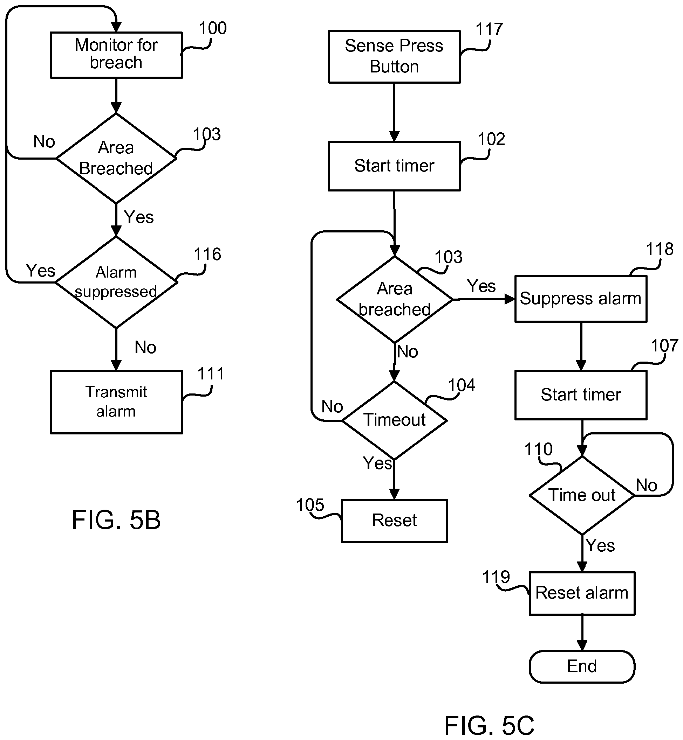

FIGs. 5B and 5C illustrate another embodiment method 550 for reducing false alarms in an asset tracking device. In this embodiment method 550, the tracking device 1 always monitors for a breach and does not include a trip mode. As discussed in more detail below, the tracking device may remain in the same operational mode but the notification of a breach (e.g., the sending of an alarm) is suppressed for a predetermined amount of time.

When the tracking device is turned on, it may begin monitoring for a breach of the safe zone in step 100. The tracking device may monitor the first radio receiver to detect a breach of the safe zone in determination step 103, such as by detecting when the RF beacon can no longer be received and/or when the tracker GPS location is outside of a virtual boundary around the safe zone. So long as a breach is not detected (i.e., while determination step 103 = "No"), the tracking device continues monitoring for a breach in step 100. However, when a breach is detected, (i.e., determination step 103 = "Yes"), the tracking device may determine whether an alarm/notification has been set to be suppressed in determination step 116. In an embodiment this may be accomplished by the processor checking whether an alarm or notification bit in a control register has been set (e.g., whether the bit equals "1" or "0"). Alternatively, this may be accomplished by determining whether an alarm suppression bit in a control register has been set (e.g., whether the bit equals "1" or "0"). In a further embodiment, a single alarm/notification or suppression bit may serve both purposes by indicating that an alarm or notification should be issued or sent if it has one value ("1" or "0") and indicating that an alarm should be suppressed if the bit has the opposite value ("0" or "1"). If the alarm/notification has been set to suppress, (i.e., determination step 116 = "Yes"), the tracking device may continue monitoring for beach by returning to step 100 without activating or issuing an alarm. However, if the alarm/notification bit has not been set to suppress (i.e., determination step 116 = "No"), then an alarm may be issued, activated or sent in step 111. Again, since the determination of whether to send an alarm or suppress an alarm may be an binary decision in determination step 116, the label of an alarm suppression bit is arbitrary and the determination may be either whether a bit has been set indicating that an alarm or notification should be or for suppressing the alarm or notification.

FIG. 5C illustrates a method for that works in conjunction with the method illustrated in FIG. 5B. As discussed above and illustrated in FIG. 5B, the tracking device in this embodiment is always monitoring for a breach. In this embodiment, when a tracking device is in a safe zone operating mode (i.e., the tracking device will issue an alarm if it is removed from the safe zone) and a user of the tracking device wishes to remove an asset from the safe zone, the alarm reduction algorithm may be initiated, such as by pressing a button, entering a PIN or actuating a switch on the tracking device which the processor of the device senses in step 117. Pressing the button (or entering a PIN or actuating a switch) in step 117 may start a first timer in step 102. As in the previous embodiment, this timer may provide the user with a predetermined amount of time, for example 10 to 15 minutes, to exit the safe zone 11 with the asset 9. In an embodiment, this first predetermined amount of time may be set by the manufacturer. In an alternative embodiment, the user may select or change the first predetermined amount of time. In another embodiment, rather than starting a first timer in the tracking device 1 upon pressing the button in step 117, a communication signal indicating breach suppression may be sent from the tracking device 1 to a server. A first timer may then be set on the server in response the receive breach suppression signal. The remaining steps of this embodiment of the suppression algorithm correspond to the steps described below but are performed on the server.

After the first timer is started, the tracking device may monitor the first radio receiver to detect a breach of the safe zone in determination step 103, such as by detecting when the RF beacon can no longer be received. So long as a breach is not detected (i.e., while determination step 103 = "No"), the device processor determines whether the first predetermined amount of time has expired in determination step 104. While the first predetermined amount of time has not expired, (i.e., while determination step 104 = "No"), the tracking device 1 may continue monitoring for a breach. When the first predetermined amount of time expires, (i.e., determination step 104 = "Yes"), this indicates that the asset 9 has not been removed within the allotted time, so the tracking device 1 processor may reset the alarm suppression mode in step 105, return to normal operations monitoring for a breach of the safe zone in step 100.

If a breach is detected by the asset 9 being removed from the safe zone 11 (i.e., determination step 103 = "Yes") before the first predetermined time expires, then a notification/alarm suppression bit may be set in step 118. Also, a second timer may be started in step 107 which may be monitored to provide the user with an allotted amount of time to be out of the safe zone 11 before the asset tracking device 1 will issue or send an alarm. The second timer may be monitored to determine if the allotted time has expired in determination step 110. Until the second timer expires (i.e., determination step 110 = "No"), the notification/alarm suppression bit may remain set and the second timer continues to run. When the predetermined time to be outside of the safe zone expires (i.e., determination step 110 = "Yes"), the notification/alarm suppression bit may be reset in step 111. In this state, when the processor determines that the device has breached the safe zone (i.e., determination step 103 = "Yes"), the tracking device will determine that the alarm/notification bit is not set (i.e., determination step 116 = "No"), and the processor may issue or send an alarm. As discussed above, the alarm may be an e-mail or SMS to one or more people informing them of the breach and providing location information.

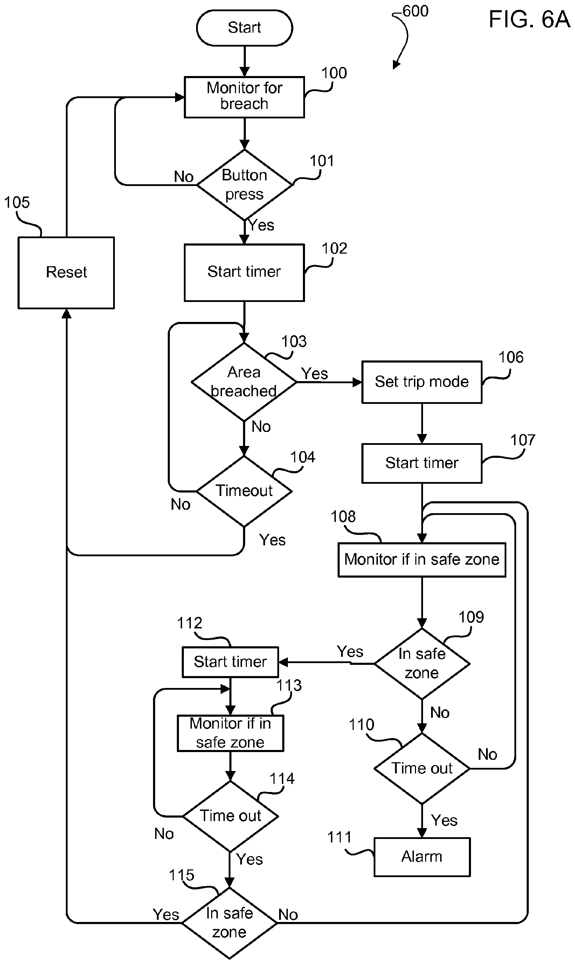

Figure 6A illustrates an alternative embodiment method 600 for reducing false alarms in an asset tracking device. The illustrated method addresses the situation in which the asset 9 temporarily passes through the safe zone 11, but this temporary return is not intended to be a final return. For example, a dog owner may wish to walk his dog up and down the street, passing his home within the safe zone several times without reactivating the tracking device.

The first portion of this embodiment method 600 illustrated in FIG. 6A is the same as the previously described embodiment method 500 through determination step 109. At determination step 109, if the device processor determines that the asset 9 is within the safe zone 11 (i.e., determination step 109 = "Yes"), a third timer is started, step 112, rather than immediately resetting the tracking device 1. The third timer gives the user a predetermined amount of time to exit the safe zone 11 before the tracking device 1 will be reset in step 105. The tracking device monitors whether the asset 9 remains in the safe zone, step 113. The tracking device processor also monitors whether the third predetermined amount of time has expired in determination step 114. While the third predetermined amount of time has not expired (i.e., determination step 114 = "No"), the tracking device continues monitoring if the asset 9 is in the safe zone 11 in step 113. When the third predetermined amount of time expires (i.e., determination step 114 = "Yes"), the tracking device determines if the asset 9 is still in the safe zone 11 in determination step 115. If the asset 9 is still in the safe zone beyond the allotted time (i.e., determination step 115 = "Yes"), it is assumed that the asset 9 has been returned with the intent of keeping the asset 9 in the safe zone 11, so the tracking device 1 is reset in step 105. With the device reset, the device processor returns to normal operations monitoring for a breach of the safe zone (i.e., a safe zone operating mode) in step 100. On the other hand, if the asset 9 has left the safe zone 11 (i.e., determination step 115 = "No"), device processor returns to step 108 to continue operating in the trip mode. That is, the asset 9 is treated as if it had bypassed (or not entered) the safe zone 11.

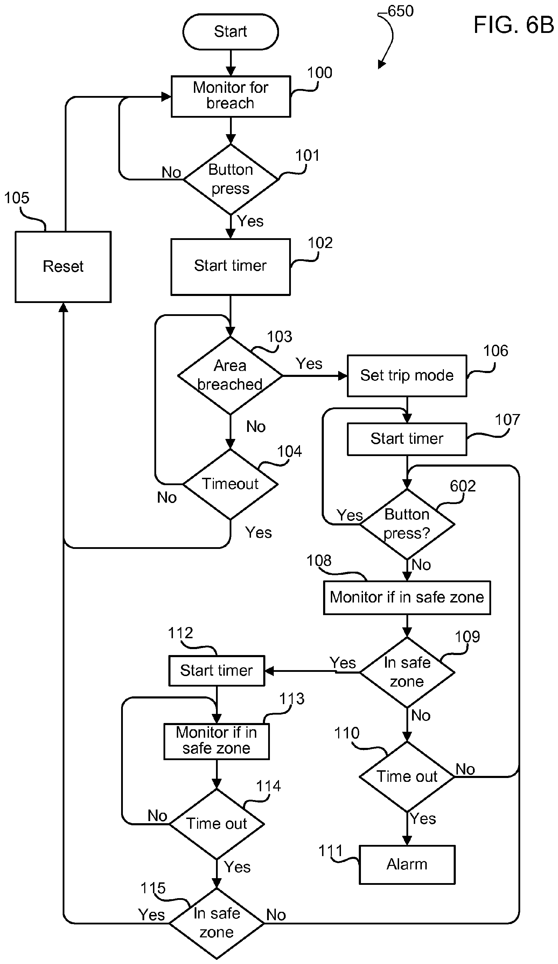

Figure 6B illustrates an alternative embodiment method 650 for reducing false alarms in an asset tracking device that enables a user to extend the duration of a departure from the safe zone (i.e., trip mode) while outside the safe zone by a second press of the trip button. In this embodiment, if the breach notification timer has not expired and the user presses the trip button again the tracking device will record a request to extend the time allowed outside of the safe zone for another configurable period.

The first portion of this embodiment method 650 illustrated in FIG. 6B is the same as the previously described embodiment method 600 with the addition of determination step 602 within the trip mode routine that monitors for a press of the trip mode button while in the trip mode. So long as a trip button press is not detected (i.e., determination step 602 = "No"), the trip mode may continue as described above with reference to FIG. 6A. If the tracking device processor detects a press of the trip button while in the trip mode and before a time out (i.e., determination step 602 = "Yes") the processor may restart the timer, such as by returning to step 107 to restart the timer for the predetermined amount of time. In an embodiment, restarting of the timer (i.e., step 107) may occur when the first time period expires (i.e., when determination step 110 = "Yes"), so that the predetermined amount of time is added after the allowed time outside the safe zone has expired, thereby doubling the allowed time outside the safe zone. In this embodiment, multiple button presses may be ignored and only a single time extension will be registered.

In embodiments in which the time monitoring is performed in a central server, a trip button press while in the trip mode may result in the tracking device transmitting a wireless signal to the server indicating that a button press occurred. In such embodiments, the server may add more time in response to each button press report that is received or at the expiration of the allowed time outside the safe zone.

In the above embodiments, the timing steps were described as if each timing step included its own timer. Alternatively, fewer timers may be used. That is, it is not necessary to have separate timing circuits for each timing step. Further, in alternative embodiments, additional timing circuits may be used to provide the same or different functionality.

In alternative embodiments, one or more of the steps in the above methods may be performed in a server. For example, if a user initiates a "walk mode" from the tracking device or a mobile communications device, the expected departure status could be set on the server rather than in the tracking device. Additionally, at least one of the timers may be operated on the server.

In an embodiment in which one more steps are performed on the server, the method includes providing an indication of an expected departure from a predetermined zone to a server and determining whether departure of the asset from the predetermined zone occurs as expected by determining whether departure of the asset from the predetermined zone occurs within a first time period from the indication of the expected departure from the predetermined zone. The method may also include suppressing a user notification of a departure from the predetermined zone (e.g., an alarm) if the departure is determined by the server to be expected. The user notification may be suppressed by having the server not issue or send an alarm. The server may send a communication signal to reset the tracking device to a normal operating mode if departure of the asset from the predetermined zone does not occur within the first time period. Alternatively, the server may send a communication signal to reset the tracking device to a normal operating mode upon detecting the return of the asset to the predetermined zone after detecting the return of the asset to the predetermined zone. In a further alternative, the server may simply return its own configuration to a normal operating mode without the need to communicate a setting to the tracking device.

In a further embodiment, the breach suppression functionality of the various embodiments may be overridden by an authorized server or service. This embodiment may enable the owner of the tracking device or tracked asset to disable the trip mode operations to prevent the functionality to be used by unauthorized individuals. In embodiments in which the timers and the functionality of issuing an alarm or notification is accomplished in the tracking device, an administrative action may be taken at a network server that issues a command to the tracking device via a wireless communication link to disable the breach suppression functionality. Alternatively or in addition, the tracking device may include a button, keypad code or a switch (e.g., a switch that can only be actuated by a user having a physical key). In either case, the tracking device processor may respond to such inputs by disabling the trip button or ignoring any presses of the button, thereby causing the tracking device to remain in the safe zone mode (i.e., armed to report any breach of the safe zone). In embodiments in which one more steps are performed on the server, the breach suppression functionality may be suppressed by an administrative action taken at a network server that removes or deactivates any suppression functionality within the server-implemented monitoring method.

Again, as discussed above, the reference to a notification/alarm suppression bit in the embodiment descriptions is arbitrary since the decision is binary (i.e., whether an alarm or notification should or should not be sent). So operations described above involving setting a bit may also encompass resetting a bit, such as resetting a notification/alarm bit, and both alternatives are encompassed in various embodiments. Also, the method of tracking whether an alarm or notification should be sent may be accomplished in various embodiments using other logical elements, such as flags, stored values encompassing more than one bit, operating modes, switch positions, etc. Therefore, references to an alarm/notification suppression bit in the foregoing embodiment descriptions is not intended to limit the scope of the claims to such a method unless specifically recited in a claim.

Example embodiments of tracking devices 1 are illustrated in FIGs. 7A and 7B. In the various embodiments, the tracking device 1 may include a tracking circuitry 150 that is sealed within a housing 32. The housing 32 may made of any suitable material such as plastic, rubber, stainless steel, etc. The tracking circuitry 150 may include a processor 151 coupled to memory 152 and a power source, such as a battery 153. In an embodiment, the tracking circuitry 150 may also include one or more light emitting diodes (LEDs) 154 which may be used to communicate operational status information. A long range transceiver 155 or high-power radio, such as a cellular data transceiver, may be coupled to the processor 151 and configured to establish communication links 12 with a long-range wireless network, such as a cellular data network 4. A short range radio 156 is also coupled to the processor 151 and configured to receive communication signals from the RF beacon.

The tracking circuitry 150 may also include a user input mechanism 34 coupled to the processor 151, such as a button, small keypad or a switch. The processor 151 may be configured with processor-executable instructions to receive user inputs from the input mechanism and interpret the inputs (e.g., button press, entry of a PIN number, movement of a switch, etc.) as control inputs, such as a user input indicative of expected departure of the tracking device from a safe zone. In an embodiment, the user input mechanism 34 may be an RFID tag or chip that can receive an RFID query signal.

The tracking circuitry 150 may also include an induction charging circuit element 157 so that the battery 153 can be recharged by placing the tracking device 1 in close proximity to an induction charging system. This embodiment enables the asset tracking device to be hermetically sealed. Such an induction charging element 157 may include an induction coil 158 coupled to a rectifier circuit 159. When an alternating magnetic field is applied to the coil 158, alternating electrical currents are induced in the coil and are rectified by the rectifier circuit 159 to output a charging voltage. The charging voltage may be regulated by the processor 151 and used to charge the battery 153. In an alternative embodiment illustrated in FIG. 7B, the induction charging circuit element 157 is replaced with electrical sockets 160 that are configured to accept pins to establish electrical connections with a charging station.

In an embodiment, the long range transceiver 155 or high-power radio may be a cellular data network transceiver. In another embodiment, the long range transceiver 155 may be configured to communicate with either or both wireless local-area networks (e.g., WiFi) and cellular telephone wireless wide-area networks. In another embodiment, the tracking device 1 may include both a long range transceiver 155 (or high-power radio) and a cellular telephone transceiver which is not shown separately, but would be represented in a similar manner in a component block diagram.

In addition to the processor 151, memory 152, and transceivers 155, 156, the tracking device 1 may include a mechanism for reliably determining when it is removed from an asset 9. A variety of removal detection mechanisms may be used.

In an example embodiment illustrated in FIG. 7A, a conductor 950 is provided that extends completely around the asset 9 (e.g., a wire embedded in a dog collar) and connects to two inputs of the processor 151. In this embodiment, the processor 151 can detect when the conductor 950 is severed, as may be required to remove the tracking device 1 from the asset. For example, as illustrated in FIG. 7A, the processor 151 may apply a positive voltage to one end of the conductor 950 coupled to the processor 151 as an output and test the voltage of the other end which is connected as an input to the processor 151. If the input voltage from the conductor 950 falls to near zero, this indicates that the conductor 950 has been severed as occurs when the tracking device 1 is removed from an asset 9. Such a conductor 950 may be in the form of a wire, a conductive trace, or a conductive ribbon that extends around a portion of the asset 9. For example, the conductor 950 may be in the form of a conductive trace within a dog collar that connects to the tracking device 1 in a manner that provides both an electrical connection on either end to the processor 151 and a physical strap that holds the tracking device 1 around the dog's neck.

In the various devices, the processor 151 used in an asset tracking device 1 may be any programmable microprocessor, microcomputer, or multiple processor chip or chips that can be configured by software instructions to perform a variety of operations, including the operations of the various embodiments described above. In an embodiment, the processor 151 is a part of one of the internal radios, such as the processor within a cellular network transceiver. Typically, software instructions may be stored in the internal memory 152 before they are accessed and loaded into the processor 151. In some devices, the processor 151 may include internal memory 152 sufficient to store the software instructions. Memory within the processor 151 or internal memory 152 may also be used to store bits or other logical values for tracking operating modes of the device, such as in a control register which may store operating mode bits and/or flags. For the purposes of this description, the term "memory" refers to all memory accessible by the processor 151, including connected memory units 152 and memory within the processor 151 itself. In many devices, the memory 152 may be a volatile or nonvolatile memory, such as flash memory, or a mixture of both.

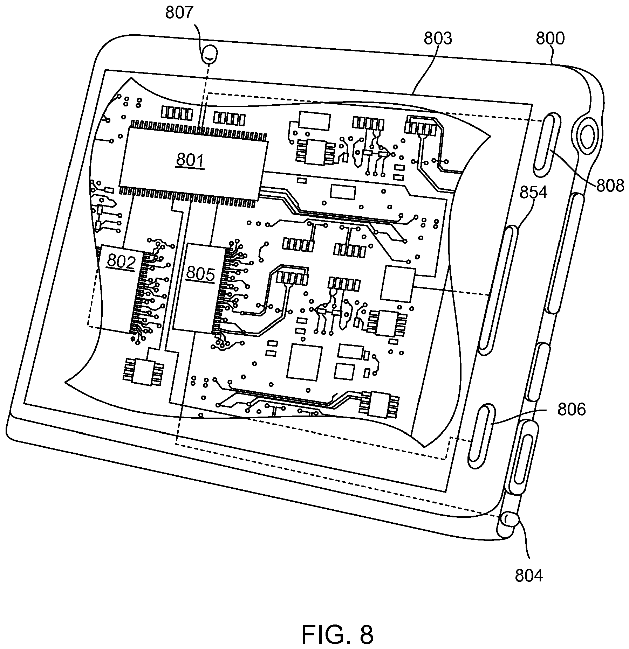

FIG. 8 is a system block diagram of a mobile device, such as a cellular smartphone 19 suitable for use with any of the embodiments described above. A typical mobile device 800 may include a processor 801 coupled to internal memory 802, a display 803, and to a speaker 854. Additionally, the mobile device 800 may include an antenna 804 for sending and receiving electromagnetic radiation that may be connected to a wireless data link, high-power radio, and/or cellular telephone transceiver 805 coupled to the processor 801, a mobile multimedia broadcast receiver 806 coupled to the processor 801 and environmental sensors 807 coupled to the processor 801. Mobile devices 800 typically also include one or more menu selection buttons or rocker switches 808 for receiving user inputs.

The processor 801 may be any programmable microprocessor, microcomputer or multiple processor chip or chips that can be configured by software instructions (applications) to perform a variety of functions, including the functions of the various aspects described above. In some devices, multiple processors 801 may be provided, such as one processor dedicated to wireless communication functions and one processor dedicated to running other applications. Typically, software applications and data may be stored in the internal memory 802 before they are accessed and loaded into the processor 801. The processor 801 may include internal memory sufficient to store the application software instructions. In many devices the internal memory may be a volatile or nonvolatile memory, such as flash memory, or a mixture of both. For the purposes of this description, a general reference to memory refers to memory accessible by the processor 801 including internal memory or removable memory plugged into the device and memory within the processor 801 itself.

In an embodiment, rather than using the user input mechanism 34 on the tracking device 1 to start the false alarm algorithm, the user may tap the display 803 of mobile device 800 to launch a tracking app, which communicates with the server 22. In this manner, embodiments of the methods 500, 600 may be performed.

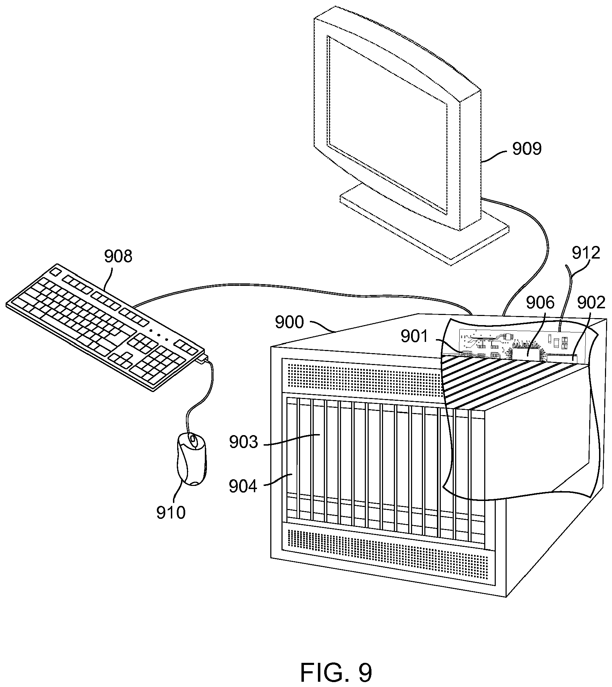

FIG. 9 illustrates an embodiment of a central server that may be used with the embodiments discussed above. A central server 900 typically includes a processor 901 coupled to volatile memory 902 and a large capacity nonvolatile memory, such as a disk drive 903. The server 900 may also include a floppy disc drive, compact disc (CD) or DVD disc drive 904 coupled to the processor 901. The server 900 may also include network access ports 906 coupled to the processor 901 for establishing data connections with a network 912, such as a local area network coupled to other broadcast system computers and servers. Servers 900 may also include operator interfaces, such as a keyboard 908, pointer device (e.g., a computer mouse 910, and a display 909.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary embodiments, the functions described may be implemented in hardware, software, firmware, or any combination thereof. If implemented in software, the functions may be stored as one or more processor-executable or server-executable instructions or code on a non-transitory processor-readable, computer-readable or server-readable medium. The steps of a method or algorithm disclosed herein may be embodied in a processor-executable or server-executable software module which may reside on a non-transitory processor-readable, computer-readable or server-readable medium. Non-transitory processor-readable, computer-readable or server-readable media includes any available media that may be accessed by a computer. By way of example, and not limitation, such non-transitory processor-readable, computer-readable or server-readable media may comprise RAM, ROM, EEPROM, CD-ROM, or other optical disk storage, magnetic disk storage, or other magnetic storage devices, or any other medium that may be used to carry or store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory processor-readable, computer-readable or server-readable media. Additionally, the operations of a method or algorithm may reside as one or any combination or set of codes and/or instructions on a non-transitory machine readable medium and/or non-transitory processor-readable, computer-readable or server-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the following claims and the principles and novel features disclosed herein.

## Claims

1. A method of tracking an asset (9) having a tracking device (1) affixed thereto, comprising:
providing (101) an indication of an expected departure from a predetermined zone (11);
determining (103) whether departure of the asset (9) from the predetermined zone (11) occurs as expected, wherein determining whether departure of the asset (9) from the predetermined zone (11) occurs as expected comprises determining whether departure of the asset (9) from the predetermined zone (11) occurs within a first time period from the indication of an expected departure from the predetermined zone (11);
suppressing (116) user notification of a departure from the predetermined zone (11) if the departure was determined to be expected; and
resetting (105) the tracking device (1) to a normal operating mode for monitoring for a breach of the predetermined zone (11) if departure of the asset (9) from the predetermined zone (11) does not occur within the first time period.

2. The method of claim 1, wherein providing an indication of expected comprises activating a control on the tracking device.

3. The method of claim 2, wherein activating the control is selected from the group of actuating a switch, entering a PIN number, pushing a button or detecting a radio frequency identification, RFID, chip.

4. The method of claim 1, further comprising initiating a heightened security level when the asset departs from the predetermined zone.

5. The method of claim 4, wherein initiating the heightened security level comprises turning on a high-power radio.

6. The method of claim 1, further comprising:
detecting a return of the asset to the predetermined zone; and
resetting the tracking device to a normal operating mode upon detecting the return of the asset to the predetermined zone.

7. The method of claim 6, further comprising starting a second timer with a second predetermined time period when the asset departs from the predetermined zone within the first time period.

8. The method of claim 7, further comprising issuing an alarm if the asset has not returned to the predetermined zone prior to expiration of the second predetermined period of time.

9. The method of claim 7, further comprising resetting the tracking device if the asset has returned to the predetermined zone prior to expiration of the second predetermined period of time.

10. The method of claim 9, further comprising:
starting a third timer with a third predetermined amount of time on detecting a return of the asset to the predetermined zone;
determining if the third predetermined period has expired;
resetting the third timer if the asset has departed the predetermined zone prior to expiration of the third predetermined period of time; and
resetting the tracking device if the asset has not departed the predetermined zone prior to expiration of the first predetermined time period.

11. A tracking device (1), comprising:
means for receiving a user input;
means for receiving a user input indicative of an expected departure from a predetermined zone (11);
means for determining whether departure of the tracking device (1) from the predetermined zone (11) occurs as expected; and
means for determining (103) whether departure of the tracking device from the predetermined zone occurs within a first time period from the indication of an expected departure from a predetermined zone (11);
means for suppressing (116) user notification of a departure from the predetermined zone (11) if the departure was determined to be expected; and
means for resetting (105) the tracking device to a normal operating mode for monitoring for a breach of the predetermined zone (11) if departure of the tracking device (1) from the predetermined zone (11) does not occur within the first time period.

12. The tracking device (1) of claim 11 wherein:
the means for receiving a user input comprises a mechanism (34) for receiving a user input selected from the group of a button, a key pad, a switch and a radio frequency identification, RFID, chip;
wherein the means for receiving a user input comprises a processor (151) coupled to the mechanism (34) for receiving a user input, wherein the processor (151) is configured with processor-executable instructions to perform operations comprising:
receiving a user input indicative of an expected departure from a predetermined zone (11);
wherein the means for determining whether departure of the tracking device from the predetermined zone occurs as expected comprises the processor (151) configured to perform operations further comprising:
determining whether departure of the tracking device (1) from the predetermined zone (11) occurs as expected; and
wherein the means for suppressing user notification comprises the processor (151) configured to perform operations further comprising: suppressing user notification of a departure from the predetermined zone (11) if the departure was determined to be expected.

13. The tracking device (1) of claim 12, wherein the processor (151) is configured with processor-executable instructions to perform operations further comprising:
determining whether departure of the tracking device (1) from the predetermined zone (11) occurs within a first time period;
resetting the tracking device (1) to the normal operating mode if departure of the tracking device (1) from the predetermined zone (11) does not occur within the first time period; and
detecting a return of the tracking device (1) to the predetermined zone (11); and
resetting the tracking device (1) to the normal operating mode upon detecting the return of the tracking device (1) to the predetermined zone (11).

14. The tracking device (1) of claim 13, further comprising:
a short range radio (156) coupled to the processor (151); and
a high-power radio (155) coupled to the processor,
wherein the processor (151) is configured with processor-executable instructions to perform operations such that:
determining whether departure of the tracking device (1) from the predetermined zone (11) occurs within the first time period comprises determining when a communication signal from an RF beacon (12) cannot be received by the short range radio (156); and
detecting a return of the tracking device to the predetermined zone comprises detecting when a communication signal from an RF beacon (12) can be received by the short range radio (156).

15. A computer program comprising executable instructions for causing at least one computer to perform a method according to one of the claims 1 to 10 when executed.

## Patentansprüche

1. Verfahren zum Verfolgen eines Gegenstandes (9) mit einer daran befestigten Verfolgungsvorrichtung (1), umfassend:
Bereitstellen (101) einer Anzeige über erwartetes Verlassen einer vorbestimmten Zone (11);
Bestimmen (103), ob das Verlassen der vorbestimmten Zone (11) von dem Gegenstand (9) wie erwartet erfolgt, wobei das Bestimmen, ob das Verlassen der vorbestimmten Zone (11) von dem Gegenstand (9) wie erwartet erfolgt, Bestimmen umfasst, ob das Verlassen der vorbestimmten Zone (11) von dem Gegenstand (9) innerhalb einer ersten Zeitspanne ab der Anzeige von einem erwarteten Verlassen der vorbestimmten Zone (11) erfolgt;
Unterdrücken (116) einer Benutzerbenachrichtigung über Verlassen der vorbestimmten Zone (11), wenn das Verlassen als zu erwarten erachtet wurde; und
Zurücksetzen (105) der Verfolgungsvorrichtung (1) auf einen normalen Betriebsmodus zum Überwachen auf einen Durchbruch der vorbestimmten Zone (11), wenn das Verlassen der vorbestimmten Zone (11) von dem Gegenstand (9) nicht innerhalb der ersten Zeitspanne eintritt.

2. Verfahren nach Anspruch 1, wobei das Bereitstellen einer Anzeige des Erwarteten Aktivieren einer Steuerung an der Verfolgungsvorrichtung umfasst.

3. Verfahren nach Anspruch 2, wobei das Aktivieren der Steuerung ausgewählt ist aus der Gruppe von Betätigen eines Schalters, Eingeben einer PIN-Nummer, Drücken einer Taste oder Erfassen einer Radiofrequenzidentifikation, RFID, -Chip.

4. Verfahren nach Anspruch 1, ferner umfassend Einführen eines erhöhten Sicherheitsniveaus, wenn der Gegenstand die vorbestimmte Zone verlässt.

5. Verfahren nach Anspruch 4, wobei das Einführen des erhöhten Sicherheitsniveaus Einschalten eines Hochleistungsfunkgerätes umfasst.

6. Verfahren nach Anspruch 1, ferner umfassend:
Erfassen einer Rückkehr des Gegenstandes in die vorbestimmte Zone; und
Zurücksetzen der Verfolgungsvorrichtung auf einen normalen Betriebsmodus nach Erfassen der Rückkehr des Gegenstandes in die vorbestimmte Zone.

7. Verfahren nach Anspruch 6, ferner umfassend Starten eines zweiten Timers mit einer zweiten vorbestimmten Zeitspanne, wenn der Gegenstand innerhalb der ersten Zeitspanne die vorbestimmte Zone verlässt.

8. Verfahren nach Anspruch 7, ferner umfassend Auslösen eines Alarms, wenn der Gegenstand vor Ablauf der zweiten vorbestimmten Zeitspanne nicht in die vorbestimmte Zone zurückgekehrt ist.

9. Verfahren nach Anspruch 7, ferner umfassend Zurücksetzen der Verfolgungsvorrichtung, wenn der Gegenstand vor Ablauf der zweiten vorbestimmten Zeitspanne in die vorbestimmte Zone zurückgekehrt ist.

10. Verfahren nach Anspruch 9, ferner umfassend:
Starten eines dritten Timers mit einer dritten vorbestimmten Zeitspanne beim Erfassen einer Rückkehr des Gegenstandes in die vorbestimmte Zone;
Bestimmen, ob die dritte vorbestimmte Zeitspanne abgelaufen ist;
Zurücksetzen des dritten Timers, wenn der Gegenstand die vorbestimmte Zone vor Ablauf der dritten vorbestimmten Zeitspanne verlassen hat; und
Zurücksetzen der Verfolgungsvorrichtung, wenn der Gegenstand die vorbestimmte Zone vor Ablauf der ersten vorbestimmte Zeitspanne nicht verlassen hat.

11. Verfolgungsvorrichtung (1), umfassend:
Mittel zum Empfangen einer Benutzereingabe;
Mittel zum Empfangen einer Benutzereingabe, die erwartetes Verlassen einer vorbestimmten Zone (11) anzeigt;
Mittel zum Bestimmen, ob das Verlassen der vorbestimmten Zone (11) von der Verfolgungsvorrichtung (1) wie erwartet erfolgt; und
Mittel zum Bestimmen (103), ob das Verlassen der vorbestimmten Zone von der Verfolgungsvorrichtung innerhalb einer ersten Zeitspanne ab der Anzeige von einem erwarteten Verlassen einer vorbestimmten Zone (11) erfolgt;
Mittel zum Unterdrücken (116) einer Benutzerbenachrichtigung über Verlassen der vorbestimmten Zone (11), wenn das Verlassen als zu erwarten bestimmt wurde; und
Mittel zum Zurücksetzen (105) der Verfolgungsvorrichtung auf einen normalen Betriebsmodus zum Überwachen auf einen Durchbruch der vorbestimmten Zone (11), wenn Verlassen der vorbestimmten Zone (11) von der Verfolgungsvorrichtung (1) nicht innerhalb der ersten Zeitspanne stattfindet.

12. Die Verfolgungsvorrichtung (1) nach Anspruch 11, wobei:
das Mittel zum Empfangen einer Benutzereingabe einen Mechanismus (34) zum Empfangen einer Benutzereingabe umfasst, die aus der Gruppe einer Taste, einer Tastatur, einem Schalter und einer Radiofrequenzidentifikation, RFID, -Chip ausgewählt ist;
wobei das Mittel zum Empfangen einer Benutzereingabe einen Prozessor (151) umfasst, der mit dem Mechanismus (34) zum Empfangen einer Benutzereingabe gekoppelt ist, wobei der Prozessor (151) mit prozessorausführbaren Anweisungen konfiguriert ist, um Operationen durchzuführen, die Folgendes umfassen:
Empfangen einer Benutzereingabe, die erwartetes Verlassen einer vorbestimmten Zone (11) anzeigt;
wobei das Mittel zum Bestimmen, ob das Verlassen der vorbestimmten Zone von der Verfolgungsvorrichtung wie erwartet erfolgt, den Prozessor (151) umfasst, der konfiguriert ist, um Operationen durchzuführen, die Folgendes umfassen:
Bestimmen, ob das Verlassen der vorbestimmten Zone (11) von der Verfolgungsvorrichtung (1) wie erwartet erfolgt; und
wobei das Mittel zum Unterdrücken der Benutzerbenachrichtigung den Prozessor (151) umfasst, der konfiguriert ist, um Operationen durchzuführen, die Folgendes umfassen:
Unterdrücken der Benutzerbenachrichtigung über Verlassen der vorbestimmten Zone (11), wenn das Verlassen als zu erwarten bestimmt wurde.

13. Verfolgungsvorrichtung (1) nach Anspruch 12, wobei der Prozessor (151) mit prozessorausführbaren Anweisungen konfiguriert ist, um Operationen durchzuführen, die Folgendes umfassen:
Bestimmen, ob das Verlassen der vorbestimmten Zone (11) von der Verfolgungsvorrichtung (1) innerhalb einer ersten Zeitspanne erfolgt;
Zurücksetzen der Verfolgungsvorrichtung (1) auf den normalen Betriebsmodus, wenn das Verlassen der vorbestimmten Zone (11) von der Verfolgungsvorrichtung (1) innerhalb der ersten Zeitspanne nicht erfolgt; und
Erfassen einer Rückkehr der Verfolgungsvorrichtung (1) in die vorbestimmte Zone (11); und
Zurücksetzen der Verfolgungsvorrichtung (1) in den normalen Betriebsmodus beim Erfassen der Rückkehr der Verfolgungsvorrichtung (1) in die vorbestimmte Zone (11).

14. Verfolgungsvorrichtung (1) nach Anspruch 13, ferner umfassend:
ein Kurzstreckenfunkgerät (156), das mit dem Prozessor (151) gekoppelt ist; und
ein Hochleistungsfunkgerät (155), das mit dem Prozessor gekoppelt ist,
wobei der Prozessor (151) mit prozessorausführbaren Anweisungen konfiguriert ist, um folgende Operationen durchzuführen:
Bestimmen, ob Verlassen der vorbestimmten Zone (11) von der Verfolgungsvorrichtung (1) innerhalb der ersten Zeitspanne eintritt, umfassend das Bestimmen, wann ein Kommunikationssignal von einem HF-Funkfeuer (12) nicht von dem Kurzstreckenfunkgerät (156) empfangen werden kann; und
Erfassen einer Rückkehr der Verfolgungsvorrichtung in die vorbestimmte Zone, umfassend das Erfassen, wann ein Kommunikationssignal von einem HF-Funkfeuer (12) von dem Kurzstreckenfunkgerät (156) empfangen werden kann.

15. Computerprogramm, umfassend ausführbare Anweisungen, um mindestens einen Computer zu veranlassen, ein Verfahren nach einem der Ansprüche 1 bis 10 auszuführen, wenn sie ausgeführt werden.

## Revendications

1. Procédé de pistage d'un bien (9) auquel est fixé un dispositif de pistage (1), comprenant :
la production (101) d'une indication d'un départ prévu hors d'une zone prédéterminée (11) ;
la détermination (103) si un départ du bien (9) hors de la zone prédéterminée (11) survient comme prévu, dans lequel la détermination si un départ du bien (9) hors de la zone prédéterminée (11) survient comme prévu comprend la détermination si le départ du bien (9) hors de la zone prédéterminée (11) survient pendant une première période de temps depuis l'indication du départ prévu hors de la zone prédéterminée (11) ;
la suppression (116) d'une notification à un utilisateur d'un départ hors de la zone prédéterminée (11) s'il a été déterminé que le départ était prévu ; et
la réinitialisation (105) du dispositif de pistage (1) à un mode opératoire normal pour surveiller une violation de la zone prédéterminée (11) si le départ du bien (9) hors de la zone prédéterminée (11) ne survient pas pendant la première période de temps.

2. Procédé selon la revendication 1, dans lequel la production d'une indication d'un départ prévu comprend l'activation d'une commande sur le dispositif de pistage.

3. Procédé selon la revendication 2, dans lequel l'activation de la commande est sélectionnée dans le groupe formé par l'actionnement d'un interrupteur, l'entrée d'un numéro PIN, l'appui sur un bouton ou la détection d'une puce d'identification par radiofréquence, RFID.

4. Procédé selon la revendication 1, comprenant en outre la mise en place d'un degré de sécurité accru lorsque le bien part hors de la zone prédéterminée.

5. Procédé selon la revendication 4, dans lequel la mise en place d'un degré de sécurité accru comprend la mise sous tension d'une radio de forte puissance.

6. Procédé selon la revendication 1, comprenant en outre :
la détection d'un retour du bien à la zone prédéterminée ; et
la réinitialisation du dispositif de pistage à un mode opératoire normal lors de la détection du retour du bien à la zone prédéterminée.

7. Procédé selon la revendication 6, comprenant en outre le démarrage d'un deuxième temporisateur avec une deuxième période de temps prédéterminée lorsque le bien part hors de la zone prédéterminée dans la première période de temps.

8. Procédé selon la revendication 7, comprenant en outre l'émission d'une alerte si le bien n'est pas retourné à la zone prédéterminée avant l'expiration de la deuxième période de temps prédéterminée.

9. Procédé selon la revendication 7, comprenant en outre la réinitialisation du dispositif de pistage si le bien est retourné à la zone prédéterminée avant l'expiration de la deuxième période de temps prédéterminée.

10. Procédé selon la revendication 9, comprenant en outre :
le démarrage d'un troisième temporisateur avec une troisième quantité de temps prédéterminée lors d'une détection d'un retour du bien à la zone prédéterminée ;
la détermination si la troisième période prédéterminée a expiré ;
la réinitialisation du troisième temporisateur si le bien est parti hors de la zone prédéterminée avant l'expiration de la troisième période de temps prédéterminée ; et
la réinitialisation du dispositif de pistage si le bien n'est pas parti hors de la zone prédéterminée avant l'expiration de la première période de temps prédéterminée.

11. Dispositif de pistage (1), comprenant :
un moyen pour recevoir une entrée utilisateur ;
un moyen pour recevoir une entrée utilisateur indiquant un départ prévu hors d'une zone prédéterminée (11) ;
un moyen pour déterminer si le départ du dispositif de pistage (1) hors de la zone prédéterminée (11) survient comme prévu ; et
un moyen pour déterminer (103) si le départ du dispositif de pistage hors de la zone prédéterminée survient pendant une première période de temps depuis l'indication du départ prévu d'une zone prédéterminée (11) ;
un moyen pour supprimer (116) une notification à un utilisateur d'un départ hors de la zone prédéterminée (11) s'il a été déterminé que le départ était prévu ; et
un moyen pour réinitialiser (105) le dispositif de pistage à un mode opératoire normal pour surveiller une violation de la zone prédéterminée (11) si le départ du dispositif de pistage (1) hors de la zone prédéterminée (11) ne survient pas pendant la première période de temps.

12. Dispositif de pistage (1) selon la revendication 11, dans lequel :
le moyen pour recevoir une entrée utilisateur comprend un mécanisme (34) pour recevoir une entrée utilisateur sélectionnée dans le groupe formé par un bouton, un clavier, un commutateur et une puce d'identification par radiofréquence, RFID ;
dans lequel le moyen pour recevoir une entrée utilisateur comprend un processeur (151) couplé au mécanisme (34) pour recevoir une entrée utilisateur, dans lequel le processeur (151) est configuré avec des instructions exécutables par processeur pour réaliser des opérations comprenant :
la réception d'une entrée utilisateur indiquant un départ prévu hors d'une zone prédéterminée (11) ;
dans lequel le moyen pour déterminer si le départ du dispositif de pistage hors de la zone prédéterminée survient comme prévu comprend le processeur (151) configuré pour réaliser des opérations comprenant en outre :
la détermination si le départ du dispositif de pistage (1) hors de la zone prédéterminée (11) survient comme prévu ; et
dans lequel le moyen pour supprimer une notification à un utilisateur comprend le processeur (151) configuré pour réaliser des opérations comprenant en outre :
la suppression d'une notification à un utilisateur du départ hors de la zone prédéterminée (11) s'il a été déterminé que le départ était prévu.

13. Dispositif de pistage (1) selon la revendication 12, dans lequel le processeur (151) est configuré avec des instructions exécutables par processeur pour réaliser des opérations comprenant en outre :
la détermination si le départ du dispositif de pistage (1) hors de la zone prédéterminée (11) survient pendant une première période de temps ;
la réinitialisation du dispositif de pistage (1) au mode opératoire normal si le départ du dispositif de pistage (1) hors de la zone prédéterminée (11) ne survient pas pendant la première période de temps ; et
la détection d'un retour du dispositif de pistage (1) vers la zone prédéterminée (11) ; et
la réinitialisation du dispositif de pistage (1) au mode opératoire normal lors de la détection du retour du dispositif de pistage (1) vers la zone prédéterminée (11).

14. Dispositif de pistage (1) selon la revendication 13, comprenant en outre :
une radio de courte portée (156) couplée au processeur (151) ; et
une radio de forte puissance (155) couplée au processeur,
dans lequel le processeur (151) est configuré avec des instructions exécutables par processeur pour réaliser des opérations telles que :
la détermination si le départ du dispositif de pistage (1) hors de la zone prédéterminée (11) survient pendant la première période de temps comprenne la détermination du moment où un signal de communication provenant d'une balise RF (12) ne peut pas être reçu par la radio de courte portée (156) ; et
la détection d'un retour du dispositif de pistage vers la zone prédéterminée comprenne la détection du moment où un signal de communication provenant d'une balise RF (12) peut être reçu par la radio de courte portée (156).

15. Programme informatique comprenant des instructions exécutables pour amener au moins un ordinateur à mettre en oeuvre un procédé selon l'une des revendications 1 à 10 lorsqu'elles sont exécutées.
